# EUROPEAN PATENT APPLICATION

(11) **EP 4 847 298 A1**
(43) Date of publication of application: **02.12.2026**
(21) Application number: 26180905.7
(22) Date of filing: 26.05.2026
(51) Int. Cl.: B60L 53/16, B60L 1/02, H01R 13/04, H05B 3/06

(54) **CHARGING SOCKET AND ELECTRIC VEHICLE**

(30) Priority: 29.05.2025 CN 202510713347
(71) Applicant: Tyco Electronics (Suzhou) Ltd., Suzhou City, Jiangsu Province 215126 (CN); Tyco Electronics (Shanghai) Co. Ltd., Shanghai 200131 (CN); Tyco Electronics Technology (SIP) Ltd., Suzhou 215026 (CN)
(72) Inventor: Meng, Xiangcun, Suzhou, 32 215123 (CN); Dou, Renyi, Suzhou, 32 215123 (CN); Zhu, Fangyue, Shanghai, 200233 (CN); Wang, Jinshun, Suzhou, 32 215123 (CN)
(74) Representative: Grünecker Patent- und Rechtsanwälte PartG mbB

(57) **Abstract**

A charging socket and an electric vehicle comprising the same are disclosed in the present disclosure. The charging socket comprises: a bracket provided with an inner wall and an outer wall, both of which protrude in an axial direction, the inner wall enclosing a charging port, and the outer wall being located radially outside of the inner wall and spaced apart from the inner wall to enclose a receiving chamber between the inner wall and the outer wall; and a heating element fixed in the receiving chamber and configured to heat the charging socket when being powered on by a power source; the outer wall is provided with a connecting hole on its top, so that the heating element is electrically connected to the power supply through the connecting hole. Since the heating element is located radially outside the inner wall in the receiving chamber, it is located radially outside the charging port to surround the charging port. The heating element may thus maximize its area around the charging port to fully heat a charging gun inserted into the charging port, so that the charging gun may be pulled out or inserted into the charging socket normally even in cold snow conditions.

## Description

### CROSS-REFERENCE TO RELATED APPLICATION

The present disclosure claims the benefit of Chinese Patent Application Invention No. 2025107133479 filed on May 29, 2025 in the China National Intellectual Property Administration, the whole disclosure of which is incorporated herein by reference.

### BACKGROUND OF THE DISCLOSURE

### Field of the Disclosure

The present disclosure relates to a field of a new energy vehicle, and more specifically, to a charging socket and an electric vehicle.

### Description of the Related Art

With rapid development of the new energy vehicle, more and more new energy vehicle manufacturers are targeting cold regions such as Northern Europe, Russia, Canada, and so on. However, in these cold regions, new energy vehicles will be affected by extreme cold weather. After charging is completed, the charging gun and charging dock may freeze due to water vapor condensation or rain and snow, thus the charging gun may not be pulled out normally from the charging dock. This will affect normal use of new energy vehicles in these cold regions.

In order to ensure the normal use of new energy vehicles in these cold regions, it is urgent to provide a charging socket with heating function that is simple in structure, low in maintenance cost, safe and durable.

### SUMMARY OF THE DISCLOSURE

According to one aspect of the present disclosure, there is provided a charging socket with heating function that is simple in structure, low in maintenance cost, safe and durable, comprising: a bracket provided with an inner wall and an outer wall, both of which protrude in an axial direction, the inner wall enclosing a charging port, and the outer wall being located radially outside of the inner wall and spaced apart from the inner wall to enclose a receiving chamber between the inner wall and the outer wall; and a heating element fixed in the receiving chamber and configured to heat the charging socket when being powered on by a power source; wherein, the outer wall is provided with a connecting hole on its top, so that the heating element is electrically connected to the power source through the connecting hole, since the heating element is located radially outside the inner wall in the receiving chamber, it is located radially outside the charging port to surround the charging port, thus the heating element may maximize its area around the charging port to fully heat a charging gun inserted into the charging port, so that the charging gun may be pulled out or inserted into the charging socket normally even in cold snow conditions so as to ensure the normal charging of electric vehicles in cold regions.

According to one aspect of the present disclosure, the charging socket further comprises: a printed circuit board suitable for mounting on the top of the heating element and configured to electrically connect the heating element to the power source via the connecting hole.

According to one aspect of the present disclosure, the heating element comprises a main body configured to be suitable for insertion into the receiving chamber; and a connecting portion extending from a top of the main body towards the connecting hole to fix the printed circuit board to the top of the main body.

According to one aspect of the present disclosure, the connecting portion is configured in a cylindrical shape and a threaded hole is formed in the connecting portion, so that the connecting portion may be mechanically and electrically connected to the printed circuit board through a threaded member.

According to one aspect of the present disclosure, the charging socket further comprises: a plug configured to be electrically connected to the power source and comprising: a housing mounted on the top of the outer wall; and terminals extending from the housing to electrically connect with the printed circuit board, the heating element, the printed circuit board, and the plug may be electrically connected to each other through simple assembly via the above way to form a single component, which not only simplifies a structure of the charging socket, but also makes the charging socket easy to disassemble and install, and in the event that any of the heating element, the printed circuit board, and the plug fails, the failed one is also easy to replace and maintain, thereby reducing manufacturing and maintenance costs of the charging socket.

According to one aspect of the present disclosure, the housing comprises: a first part configured in a cylindrical shape and to accommodate the terminals installed therein; and a second part disposed at one end of the first part facing the connecting hole and configured to cover the connecting hole, avoiding the exposure of the terminals to external environment, effectively preventing short circuit in the electrical connections of the terminals, increasing the safety of the electrical connection of the charging socket, and facilitating a user to hold the plug by hand for assembly, making the charging socket more reliable and durable.

According to one aspect of the present disclosure, the second part comprises: a lid configured in a plate-like shape; and a flange extending along a circumference of the lid towards the connecting hole.

According to one aspect of the present disclosure, the outer wall is provided with a connecting wall extending from its top and along a circumference of the connecting hole to define the connecting hole, and the connecting wall is provided with a protrusion on its outer side; and the flange is provided with a through hole thereon, which is suitable for snap-fit connection to the protrusion to fix the flange to the connecting wall, facilitating assembly between the plug and the outer wall.

According to one aspect of the present disclosure, the main body is configured in a cylindrical shape with an opening, and comprises two ends that are opposite to each other and spaced apart along its circumference to define the opening, the connecting portion is positioned opposite to the opening.

According to one aspect of the present disclosure, the main body is provided with channels thereon, the bracket is provided with ribs on at least one of the inner and outer walls in the receiving chamber, which are configured to be suitable for insertion into corresponding channels respectively to fix the heating element in the receiving chamber.

According to one aspect of the present disclosure, the main body comprises first and second sides that are opposite in the axial direction, and the channels comprise a plurality of first channels formed on the first side of the main body and a plurality of second channels formed on the second side of the main body, the first and second channels are alternately arranged along the circumference of the main body.

According to one aspect of the present disclosure, the ribs and channels extend along the axial direction.

According to one aspect of the present disclosure, the heating element comprises two connecting portions, one of which is electrically connected to one of the positive and negative poles of the power supply, and the other of which is electrically connected to the other of the positive and negative poles of the power supply to form a closed circuit, thereby facilitating electrification of the heating element to generate heat when electrified.

According to one aspect of the present disclosure, the heating element is an integrated injection molded part formed by electrically and thermally conductive injection molding material, so that the heating element is easy to manufacture and install, reducing the manufacturing cost of the heating element.

According to another aspect of the present disclosure, there is provided an electric vehicle comprising the charging socket according to any one of the above aspects.

### BRIEF DESCRIPTION OF THE DRAWINGS

The accompanying drawings, which are incorporated herein and form a part of the specification, illustrate the present disclosure and further serve to explain the principles of the present disclosure together with the description and to enable those skilled in the related art to make and use the embodiments described herein.
Fig. 1 is a front view of a charging socket according to an embodiment of the present disclosure;
Fig. 2 is a perspective view of the charging socket in Fig. 1, showing a heating element and a plug installed on the charging socket;
Fig. 3 is a perspective view of the individual plug in Fig. 2;
Fig. 4 is a perspective view of the connector, the printed circuit board, and the heating element installed together in Fig. 2, a second part of a housing of the plug is omitted in the drawing so as to illustrate a printed circuit board;
Fig. 5 is a perspective view of the individual heating element in Fig. 4;
Fig. 6 is a top view of the charging socket shown in Fig. 2;
Fig. 7 is a cross-sectional view taken along line VII-VII in Fig. 6;
Fig. 8 is a perspective view of the charging socket in Fig. 2 with the plug being omitted; and
Fig. 9 is a perspective view of an individual bracket in Fig. 2, showing ribs in a receiving chamber.

Features of the present disclosure will become more apparent from the detailed description set forth below when taken in conjunction with the drawings, wherein similar reference numbers always indicate corresponding elements. In the drawings, similar reference numbers generally indicate identical, functionally similar, and/or structurally similar elements. Unless otherwise stated, the figures provided throughout the present disclosure should not be interpreted as drawings drawn to scale.

### DETAILED DESCRIPTION OF EMBODIMENTS OF THE DISCLOSURE

In order to make the purpose, technical solution, and advantages of the present disclosure clearer and more understandable, the following will provide further detailed explanations of the present disclosure in conjunction with specific embodiments and with reference to the accompanying drawings.

However, it should be understood that these descriptions are only exemplary and are not intended to limit the scope of the present disclosure. In the following detailed description, for purposes of explanation, numerous specific details are set forth in order to provide a thorough understanding of the embodiments of the present disclosure. However, it may be evident that one or more embodiments may be practiced without these specific details. In addition, in the following description, descriptions of well-known structures and techniques are omitted to avoid unnecessarily obscuring the concepts of the present disclosure.

The terminology used herein is only for the purpose of describing specific embodiments, and is not intended to be limiting of the present disclosure. The terms "comprise", "include" and the like used herein indicate the existence of the features, steps, operations and/or components, but do not exclude the existence or addition of one or more other features.

When an expression such as "at least one of A, B, and C, etc." is used, it should generally be interpreted according to the meaning of the expression commonly understood by those skilled in the art (for example, "a system having at least one of A, B, and C" should be interpreted as comprising but not being limited to a system having A alone; a system having B alone; a system having C alone; a system having A and B; a system having A and C; a system having B and C; and/or a system having A, B, and C). When an expression such as "at least one of A, B, or C, etc." is used, it should generally be interpreted according to the meaning of the expression commonly understood by those skilled in the art (for example, "a system having at least one of A, B, or C" should be interpreted as comprising but not being limited to a system having A alone; a system having B alone; a system having C alone; a system having A and B; a system having A and C; a system having B and C; and/or a system having A, B, and C).

All terms (comprising technical and scientific terms) used herein have meanings commonly understood by those skilled in the art, unless otherwise defined. It should be noted that the terms used herein should be interpreted as having meanings consistent with the context of this specification, and should not be interpreted in an idealized or overly rigid manner.

The present disclosure discloses a charging socket 1000 and an electric vehicle (not shown in the drawings) comprising the charging socket 1000.

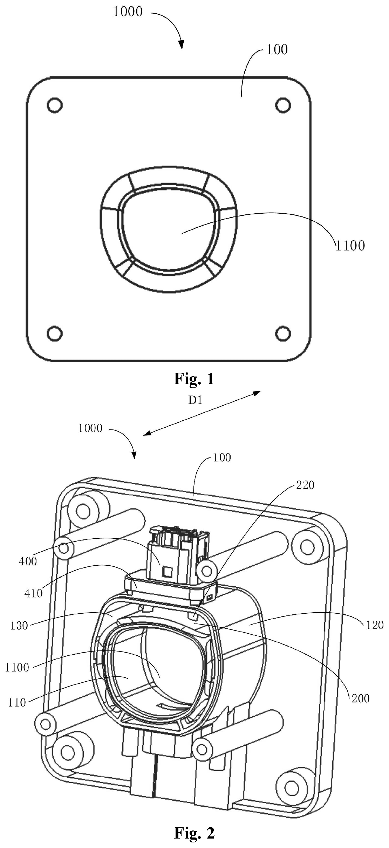

Referring to Figs. 1 to 9, the charging socket 1000 comprises a bracket 100 and a heating element 200. A front face of the bracket 100 is positioned on a plane consistent or coplanar with a body of the electric vehicle (see Fig. 1). However, those skilled in the art should understand that the present disclosure is not limited to this. In other embodiments, the front face of the bracket 100 may also be positioned on a curved surface consistent or coplanar with the body of the electric vehicle (not shown in the drawings). The bracket 100 is provided with an inner wall 110 and an outer wall 120, both of which protrude in an axial direction D1 on the back of the bracket 100. The inner wall 110 encloses a charging port 1100, and the outer wall 120 is located radially outside of the inner wall 110 and spaced apart from the inner wall 110 to enclose a receiving chamber 130 between the inner wall 110 and the outer wall 120. The heating element 200 is fixed in the receiving chamber 130 and configured to heat the charging socket 1000 when being powered on by a power source (not shown in the drawings). Due to the fact that the heating element 200 is located radially outside of the inner wall 110 within the accommodating chamber 130, it is positioned radially outside of the charging port 1100 to surround the charging port 1100. The heating element 200 may maximize its own area around the charging port 1100 to fully heat a charging gun inserted into the charging port 1100, so that the charging gun may be normally pulled out or inserted into the charging socket 1000 normally even in cold snow conditions, thereby ensuring normal charging of electric vehicles in cold regions. The outer wall 120 is provided with a connecting hole 121 on its top, so that the heating element 200 is electrically connected to the power supply through the connecting hole 121.

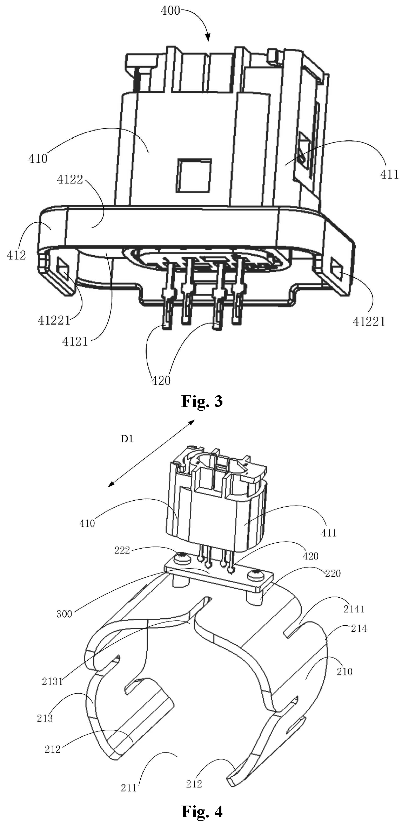

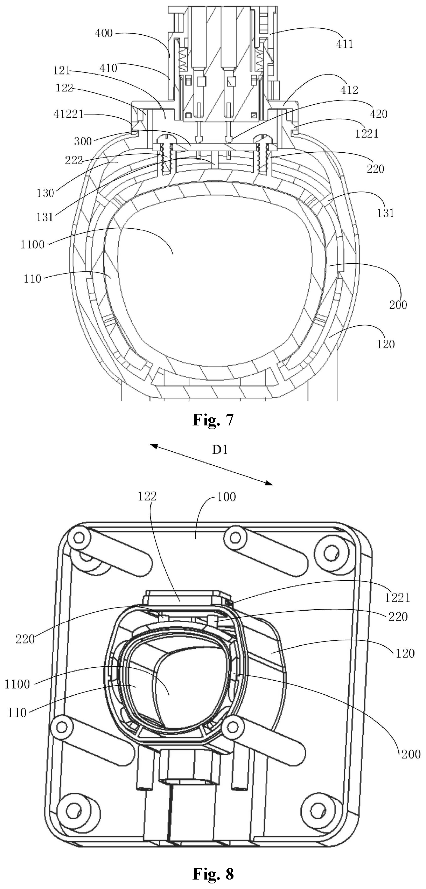

Referring to Figs. 4 and 7, the charging socket 1000 further comprises a printed circuit board (PCB) 300. The printed circuit board 300 is suitable for mounting on the top of the heating element 200 and configured to electrically connect the heating element 200 to the power source via the connecting hole 121.

Referring to Figs. 4, 5, and 7, the heating element 200 comprises a main body 210 and a connecting portion 220. The main body 210 is configured to be suitable for insertion into the receiving chamber 130. The connecting portion 220 extends from a top of the main body 210 towards the connecting hole 121 to fix the printed circuit board 300 to the top of the main body 210. The heating element 200 is an integrated injection molded part formed by electrically and thermally conductive injection molding material, making the heating element 200 easy to manufacture and install, reducing the manufacturing cost of the heating element 200. Specifically, the heating element 200 comprises two connecting portions 220, one of which is electrically connected to one of the positive and negative poles of the power supply, and the other of which is electrically connected to the other of the positive and negative poles of the power supply to form a closed circuit, thereby facilitating electrification of the heating element 200 to generate heat when electrified.

Continuing to refer to Figs. 4, 5, and 7, the connecting portion 220 is configured as a cylindrical shape and has a threaded hole 221 formed in the connecting portion 220, so that the connecting portion 220 may be mechanically and electrically connected to the printed circuit board 300 through a threaded member 222. However, those skilled in the art should understand that the present disclosure is not limited to this, and in other embodiments, the connecting portion 220 may also be configured to be in snap-fit connection to other electrical connecting members instead of the threaded member 222.

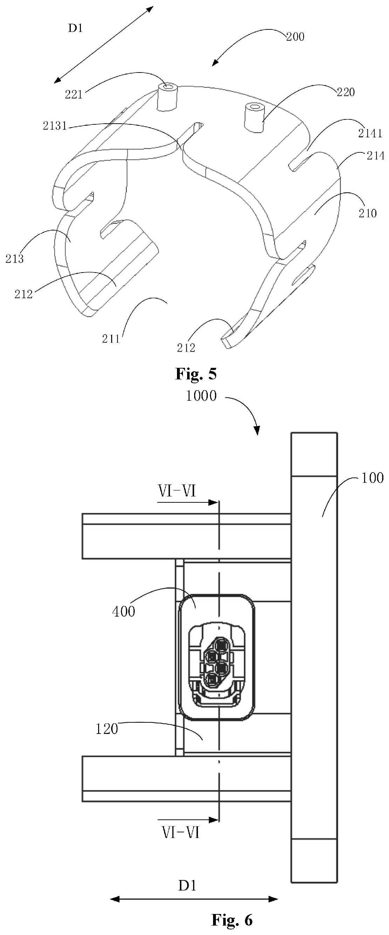

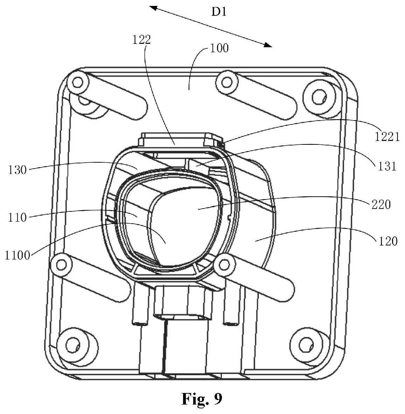

Referring to Fig. 5, the main body 210 is configured in a cylindrical shape with an opening 211. The main body 210 comprises two ends 212 that are opposite to and spaced apart from each other along its circumference to define the opening 211. The connecting portion 220 is positioned opposite to the opening 211. The main body 210 is provided with channels 2131, 2141 thereon, and the bracket 100 is provided with ribs 131 (see Fig. 9) on at least one of the inner wall 110 and the outer wall 120 in the receiving chamber 130. The ribs 131 are configured to be suitable for insertion into corresponding channels 2131, 2141 respectively to fix the heating element 200 in the receiving chamber 130.

Further referring to Fig. 5, the main body 210 has first and second sides 213 and 214 that are opposite in the axial direction D1. The channels comprise a plurality of first channels 2131 formed on the first side 213 of the main body 210 and a plurality of second channels 2141 formed on the second side 214 of the main body 210. The first channel 2131 and second channel 2141 are alternately arranged along the circumference of the main body 210. The ribs 131 and the channels extend along the axial direction D1.

Referring to Figs. 2 to 7, the charging socket 1000 further comprises a plug 400 configured to be electrically connected to the power source and comprising a housing 410 and terminals 420. The housing 410 is installed on the top of the outer wall 120. The terminals 420 extend from the housing 410 to be inserted into electrical connecting holes in the printed circuit board 300 for electrical connection with the printed circuit board 300. The heating element 200, the printed circuit board 300, and the plug 400 may be electrically connected to each other through simple assembly via the above way to form a single component. This not only simplifies a structure of the charging socket 1000, but also makes the charging socket 1000 easy to disassemble and install. In the event that any one of the heating element 200, the printed circuit board 300, and the plug 400 fails, the failed one is also easy to be replaced and maintained, thereby reducing manufacturing and maintenance costs of the charging socket 1000.

Referring to Fig. 3, the housing 410 comprises a first part 411 and a second part 412. The first part 411 is configured in a cylindrical shape and to accommodate the terminals 420 installed therein. The second part 412 is disposed at one end of the first part 411 facing the connecting hole 121 and configured to be adapted to cover the connecting hole 121, avoiding the exposure of the terminals 420 to external environment, effectively preventing short circuits in the electrical connections of the terminals 420, increasing the safety of the electrical connection of the charging socket 1000 and facilitating a user to hold the plug 400 in hand for assembly, making the charging socket 1000 more reliable and durable. The second part 412 comprises a lid 4121 configured in a plate-like shape and a flange 4122. The flange 4122 extends along a circumference of the lid 4121 towards the connecting hole 121.

Referring to Figs. 2 and 7, the outer wall 120 is provided with a connecting wall 122 extending from its top and along a circumference of the connecting hole 121 to define the connecting hole 121. The connecting wall 122 is provided with a protrusion 1221 on its outer side. The flange 4122 is provided with a through hole 41221 thereon, which is suitable for snap-fit to the protrusion 1221 to fix the flange 4122 to the connecting wall 122, facilitating assembly between the plug 400 and the outer wall 120.

So far, the embodiments of the present disclosure have been described in detail with reference to the drawings. It should be noted that the implementations not shown or described in the drawings or the text of the specification are all known to those of ordinary skill in the art and are not described in detail. In addition, the above definition of each of components is not limited to various specific structures, shapes or manners mentioned in the embodiments, and those of ordinary skill in the art may make simple changes or substitutions.

It should also be noted that, in the specific embodiments of the present disclosure, the numerical parameters in this specification and the appended claims are approximate values and may be changed according to the desired characteristics obtained by the content of the present disclosure, unless otherwise specified. In detail, all numbers expressing dimensions, ranges, and so forth used in the specification and the claims are to be understood as being modified in all instances by the term "about." In general, the expressed meaning of numbers is intended to encompass a variation of ± 10% from a specified amount in some embodiments, a variation of ± 5% from a specified amount in some embodiments, a variation of ± 1% from a specified amount in some embodiments, and a variation of ± 0.5% from a specified amount in some embodiments.

Those skilled in the art will appreciate that various combinations and/or assemblies of features recited in the various embodiments and/or claims of the present disclosure may be made, even if such combinations and/or assemblies are not explicitly recited in the present disclosure. In particular, various combinations and/or assemblies of features described in various embodiments and/or claims of the present disclosure may be made without departing from the spirit and teachings of the present disclosure. All such combinations and/or assemblies fall within the scope of the present disclosure.

The specific embodiments described above provide further detailed explanations of the objects, technical solutions, and beneficial effects of the present disclosure. It should be understood that the above description is only the specific embodiments of the present disclosure and is not intended to limit the present disclosure. Any modifications, equivalent substitutions, improvements, etc. made within the spirit and principles of the present disclosure should fall within the protection scope of the present disclosure.

## Claims

1. A charging socket, **characterized by** comprising:
a bracket provided with an inner wall and an outer wall, both of which protrude in an axial direction, the inner wall enclosing a charging port, and the outer wall being located radially outside of the inner wall and spaced apart from the inner wall to enclose a receiving chamber between the inner wall and the outer wall; and
a heating element fixed in the receiving chamber and configured to heat the charging socket when being powered on by a power source;
wherein the outer wall is provided with a connecting hole on its top, so that the heating element is electrically connected to the power source through the connecting hole.

2. The charging socket according to claim 1, **characterized by** further comprising:
a printed circuit board suitable for mounting on the top of the heating element and configured to electrically connect the heating element to the power source via the connecting hole.

3. The charging socket according to claim 2, **characterized in that** the heating element comprises:
a main body configured to be suitable for insertion into the receiving chamber; and
a connecting portion extending from a top of the main body towards the connecting hole to fix the printed circuit board to the top of the main body.

4. The charging socket according to claim 3, **characterized in that** the connecting portion is configured in a cylindrical shape and a threaded hole is formed in the connecting portion, so that the connecting portion may be mechanically and electrically connected to the printed circuit board through a threaded member.

5. The charging socket according to claim 3 or 4, **characterized by** further comprising:
a plug configured to be electrically connected to the power source and comprising: a housing mounted on the top of the outer wall; and terminals extending from the housing to electrically connect with the printed circuit board.

6. The charging socket according to claim 5, **characterized in that** the housing comprises:
a first part configured in a cylindrical shape and to accommodate the terminals installed therein; and
a second part disposed at one end of the first part facing the connecting hole and configured to cover the connecting hole.

7. The charging socket according to claim 6, **characterized in that** the second part comprises:
a lid configured in a plate-like shape; and
a flange extending along a circumference of the lid towards the connecting hole.

8. The charging socket according to claim 7, **characterized in that**
the outer wall is provided with a connecting wall extending from its top and along a circumference of the connecting hole to define the connecting hole, and the connecting wall is provided with a protrusion on its outer side; and
the flange is provided with a through hole thereon, which is suitable for snap-fit connection to the protrusion to fix the flange to the connecting wall.

9. The charging socket according to any one of claims 3, 4, 6 to 8, **characterized in that** the main body is configured in a cylindrical shape with an opening, and comprises two ends that are opposite to each other and spaced apart along its circumference to define the opening, the connecting portion is positioned opposite to the opening.

10. The charging socket according to claim 9, **characterized in that** the main body is provided with channels thereon, the bracket is provided with ribs on at least one of the inner and outer walls in the receiving chamber, which are configured to be suitable for insertion into corresponding channels respectively to fix the heating element in the receiving chamber.

11. The charging socket according to claim 10, **characterized in that** the main body comprises first and second sides that are opposite in the axial direction, and the channels comprise a plurality of first channels formed on the first side of the main body and a plurality of second channels formed on the second side of the main body, the first and second channels are alternately arranged along the circumference of the main body.

12. The charging socket according to claim 10 or 11, **characterized in that** the ribs and channels extend along the axial direction.

13. The charging socket according to any one of claims 3, 4, 6 to 8, 10 to 11, **characterized in that** the heating element comprises two connecting portions, one of which is electrically connected to one of the positive and negative poles of the power supply, and the other of which is electrically connected to the other of the positive and negative poles of the power supply.

14. The charging socket according to any one of claims 1 to 4, 6 to 8, 10 to 11, **characterized in that** the heating element is an integrated injection molded part formed by electrically and thermally conductive injection molding material.

15. An electric vehicle, **characterized by** comprising the charging socket according to any one of claims 1 to 14.
